# EUROPEAN PATENT APPLICATION

(11) **EP 3 018 606 A1**
(43) Date of publication of application: **11.05.2016**
(21) Application number: 15193064.1
(22) Date of filing: 04.11.2015
(51) Int. Cl.: G06F 21/32, G06F 21/35, G06F 21/44

(54) **SYSTEMS AND METHODS FOR ENHANCED DOCUMENT RECOGNITION AND SECURITY**

(30) Priority: 04.11.2014 US 201462074682 P
(71) Applicant: HDS Group S.A., 92000 Nanterre (FR)
(72) Inventor: STOYANOV, Anton, 92000 NANTERRE (FR); GILABER, Pascal, 92000 NANTERRE (FR)
(74) Representative: Intès, Didier Gérard André

(57) **Abstract**

A system for enhanced document recognition and security is provided. The system includes an identification document reader configured to read an identification document and to obtain information containing a plurality of data fields from the identification document, and a processor. The processor is configured to receive the information, determine a relationship between the plurality of data fields and one or more required security information fields, link the one or more security information fields to a registration, determine acceptability of the identification document, and electronically transmit the registration and information related to the required security information registration fields to a central repository.

## Description

### Field of the Disclosure

The present disclosure relates to recognition of security documents, and more particularly to recovery of information appearing on such documents and use of that information in applications that are specific to the needs of various users.

According to the laws of many jurisdictions throughout the world (e.g., French decree No. 55 1397 of October 22, 1955), an identity card is an official document enabling any citizen to prove their identity and nationality so long as the card is valid. Identity documents thus may enable people to be identified and make it possible to validate rights of access to certain locations such as airports, borders, hotels, etc. in order to avoid fraud and recognize people who may be classified as dangerous (e.g., terrorists) or otherwise wanted by the authorities. Identity documents are protected by design and by security rules seeking to protect them and to prevent them from being unlawfully duplicated.

It is thus appropriate to use tools that make it possible to incorporate these elements so that they can be processed fully. Difficulties have arisen in particular with recognizing information that appears clear on a document but that cannot be read or recovered in full when the document is scanned or read.

For example, a passport is a complex document defined by an ICAO standard No. 9303, whereas a national identity card, a residency permit, and a European identity card are protected documents that have a machine readable zone (MRZ) and/or strip complying with a definition that is clear but that cannot be processed directly with a scanner since the character fonts are varied, and thus may not be recognized by optical character recognition (OCR) hardware and/or software. Given the nature of the document, all of such processing should be confidential and protected.

Several models and languages are proposed in prior literature for the purpose of defining standards for representing security policies that are consistent and interoperable. Furthermore, certain methods are suitable for modeling access control between a plurality of domains and consist essentially in defining a decentralized system for managing access authorizations. The local security policy for each domain thus recognizes only the roles and the permissions that authorize users who have been authenticated in the domain to have access to local services. Consequently, it has not been possible to provide a transparent mode of access to the services of one domain from any other domain.

Furthermore, the company ScanShell has a product known as ID Scan. It is a system connected to a card scanner for collecting data and suitable for scanning driver's licenses, national identity cards, business cards, or any other complex document, while ignoring background, colors, or fonts. The principle is thus to perform advanced OCR technology image processing in order to provide the user with digital images of the scanned ID card together with text information in a format for enabling it to be incorporated in a database. Nevertheless, the information is transmitted in a proprietary format, and that cannot be used for various applications.

Data Mining, which is being used more and more in business, raises certain theoretical constraints. Furthermore, research into extracting patterns (data made up of a plurality of parameters) has been directed at two major challenges, namely: defining methods and tools for enabling very large volumes of data to be apprehended; and enabling patterns to be selected. Constraints then enable users to target the knowledge they consider as being important by reducing the number of potentially interesting patterns that are extracted. There also exist generic approaches for acting under constraints to extract set-building patterns and sequential patterns (De Raedt et al., 2002; Soulet and Crémilleux, 2005; Pei et al., 2002; Garofalakis et al., 1999; Leleu et al., 2003).

Furthermore, data mining under constraints has been directed to two main data mining problems: achieving effective extraction, and returning high-quality knowledge. Extracting patterns can lead to collecting too many patterns for use by a user. This is due to there being a very large number of interesting patterns that are expensive to extract from large databases and that threaten the ability to scale extraction algorithms. Thus, constraints are extremely useful both for improving the quality of the patterns that are extracted and also for the process of mining data.

### Summary of the Disclosure

Typically, the problem of identification has been processed and analyzed at a point in time that may be later than desirable for a particular application (e.g., hotel guest security). It was therefore desirable to improve processing further upstream to allow for near real-time analysis. Furthermore, because technological changes and security constraints are becoming even more important, the inventors undertook development of new methodologies.

The present inventors have recognized that technical uncertainties relate to special characters present on identity cards. Identity cards have characters that cannot be processed directly by a scanner since the fonts may be endomorphic, and thus not recognized by OCR.

Identity cards have characters that cannot be processed directly by a scanner since the fonts are varied, and thus not recognized by OCR. Furthermore, the semantic heterogeneity between the local policies of different domains constitutes an impediment, making the task of automating the access control system difficult to implement in complex environments.

The present inventors have therefore, undertaken to solve the problems they have noted by providing a system for enhanced document recognition and security. The system may include an identification document reader configured to read an identification document and to obtain information containing a plurality of data fields from the identification document and a processor. The processor is configured to receive the information, determine a relationship between the plurality of data fields and one or more required security information fields, link the one or more security information fields to a registration, checking one or more elements associated with the identification document, and electronically transmit the registration and information related to the required security information registration fields to a central repository.

The identification document may be of an undefined format.

The processor may be configured to encrypt the registration and the required security information registration fields for to secure transmission to a regulatory authority.

The processor may be configured to encrypt the registration and the required security information registration fields for to secure transmission to the central repository.

The processor may be configured to transmit the registration and information related to the required security information registration fields signed with a digital signature associated with a registering entity, for example, a law enforcement entity.

The processor may be configured to receive a secure electronic response from the regulatory authority and/or the central repository.

The processor may be configured to adhere to the standards defined by ISO 27001.

The identification document reader may be configured to read an electronic chip associated with the identification document.

The identification document reader may be configured to read image data associated with one or more images stored on the electronic chip.

The image data may be associated with at least one of a picture of an owner of the identity document and a handwritten signature of the owner.

A signature pad configured to receive a handwritten signature of an owner of the identity document may be provided.

The processor may be configured to verify the signature received from the signature pad based on the image data associated with the handwritten signature of the owner.

An optical detection unit configured to obtain an image of the owner may also be provided.

The processor may be configured to verify the image data from the electronic chip with the image of the owner obtained by the optical detection unit.

An information server may be provided, for example, linked via a network to the processor. The information server may be configured to store and provide information related to a plurality of identification document formats. For example, a template, script, and/or processing algorithm may be stored and updated at the information server. The processor, upon recognizing an unknown format of identity document may then request from the information server an associated and up-to-date template, script, or processing algorithm to process the previously unknown format as update, for example, by a governmental authority.

The unrecognized formats may be a result of an official format change promulgated by a governmental authority.

According to some embodiments of the present disclosure, a method for enhanced document recognition and security is provided. The method may include reading an identification document to obtain information containing a plurality of data fields from an identification document, determining a relationship between the plurality of data fields and one or more required security information fields, linking the one or more security information fields to a registration, checking of one or more elements associated with the identification document, and transmitting the registration and information related to the required security information registration fields to a central repository.

According to some embodiments, the method may include receiving a script from an information server and processing one or more identification documents having an unrecognized format based on the script.

The method may include checking one or more elements associated with the identity document, for example, a font of text information and/or information stored in a machine readable zone of the identity document.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### Brief Description of the Figures

Fig. 1 is an exemplary system configuration according to embodiments of the present disclosure;
Fig. 2 is a logical diagram of the processor of Fig. 1 highlighting exemplary software modules that may be provided for carrying out functions described herein;
Fig. 3 is a flowchart demonstrating one exemplary method of processing according to embodiments of the present disclosure;
Fig. 4 is a data diagram showing one exemplary data structure that may be implemented for carrying out functions described herein;
Fig. 5 shows an exemplary graphical user interface (GUI) that may be implemented for identity document scanning and checking;
Fig. 6 shows the exemplary GUI of Fig. 5 following scanning and data extraction of an identity document;
Fig. 7 shows an exemplary regulatory document prepared for forwarding to a regulatory authority based the data extracted from an identity document;

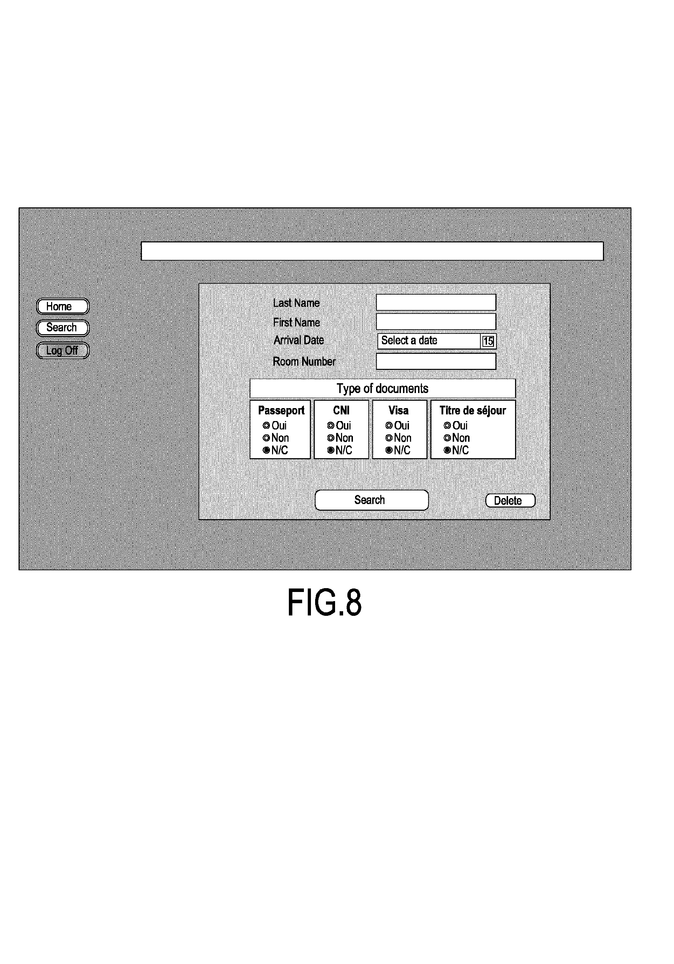

Fig. 8 shows an exemplary GUI for one implementation of data extraction related to a hotel registration and security compliance therefore.

### More Detailed Description

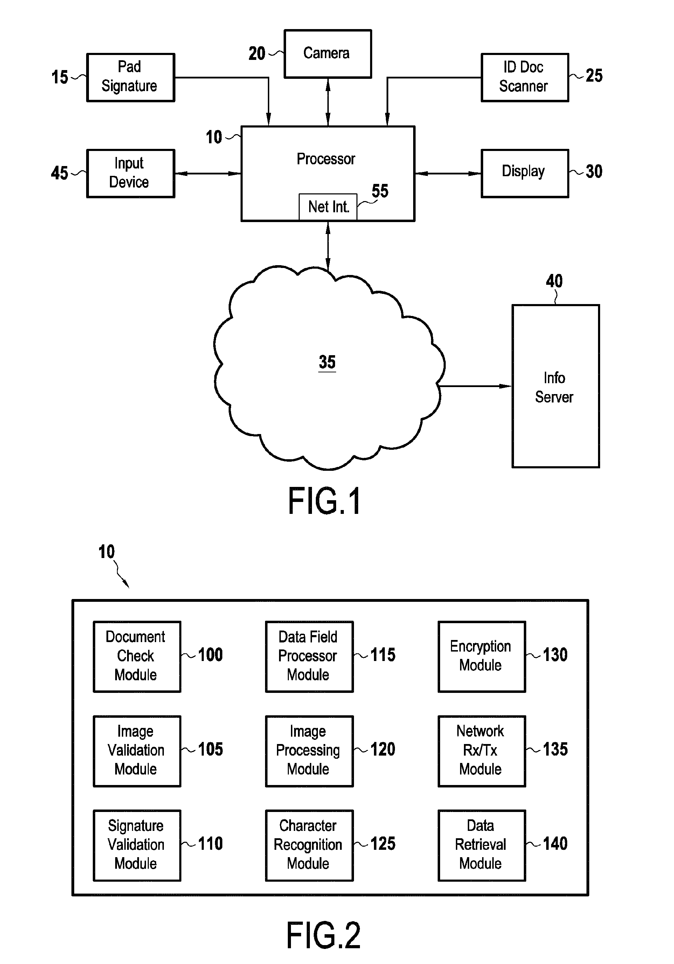

Fig. 1 is an exemplary system configuration according to embodiments of the present disclosure. A system 1 for enhanced document recognition and security may include a processor 10, a signature pad 15, one or more optical capture units 20 (e.g., a camera), an identity document scanner/reader 25, a display 30, and a network interface 55. According to some embodiments, an information server 40 may be provided at a remote location from the processor 10, or may be located near processor 10, for example, in the same building or room. According to some embodiments, a remote information server 40 may be provided, while a replicated local information server 40' is provided near processor 10. One of skill in the art will recognize that various configurations are contemplated and intended to fall within the scope of the present disclosure.

Network 35 is represented as a cloud network in figure 1, however one of skill in the art will recognize that network 35 may be any suitable network connection, for example a virtual private network (VPN), a wide area network (WAN), a cellular network, a wireless network (Wi-Fi), etc. Further, suitable security measures may be implemented within network 35 in order to provide secure communications at present sensitive identity document information from being intercepted and/or shared with an entity not entitled to obtain such information.

Signature pad 15 may be any suitable device for obtaining a signature for example a tablet device configured to receive a signature of a user using a stylus, or other suitable writing implement. Alternatively signature pad 15 may be an optical scanning device configured to obtain an image of a signature made by a user upon a sheet of paper or other suitable medium and subsequently scanned. For example, a Wacom Signature Pad STU-430 or similar may be implemented.

One or more optical capture devices 20 may further be provided for purposes of obtaining an image of an individual presenting an identity document during a check. Optical capture devices 20 may comprise for example a digital camera, a WebCam, a video camera, or any other suitable device interfacing with processor 10 and configured to provide an image of the individual.

Identity document scanner 25 may be any suitable device configured to scan and or read an identity document and provide information obtained from such an identity document to processor 10. For example identity document scanner 25 may be configured to provide a complete image of an identity document in an image format (e.g., JPEG, TIF, GIFs, PNG, etc.) as well as any text information obtained from information fields on the identity document.

In addition, identity document scanner 25 may be configured to read data containing elements on an identity document, for example, a magnetic strip, a chip (e.g. an RFID chip, biometric smart card, microprocessor chip, etc.) among others. In so doing identity document scanner 25 may obtain additional information, and/or confirmation of information printed on the identity document itself. For example a smart card or microprocessor chip may store image data related to an image of the identity document owner, fingerprint data, Iris data, and/or signature information of said owner. Such information may be read by identity document scanner 25 provided to processor 10 for output on display 30, as well as other checks, to be described below.

As mentioned above display 30 may be used for presenting information as well as graphic user interfaces (GUI) to a user, for example, a hotel clerk, and enabling the user to interact with the system. Display 30 may be any suitable display such as a monitor, a mobile phone device, a projector, etc.

Network interface 55 may permit communications between processor 10, network 35, and other processors and servers located on, for example, the Internet, or a local area network (LAN). One of skill in the art will recognize that network interface 55 may be a wireless interface, a wired interface, a cellular interface, or other suitable communication interface.

It will be understood by those skilled in the art that communication via network 35 may take place using a single or a combination of protocols and technologies. For example, communication may take place over secure Hypertext Transfer Protocol (HTTPS) and Transmission Control Protocol/Internet Protocol (TCP/IP) for transport and Hypertext Markup Language (HTML), PHP, JavaScript, and PHP for presenting information to users. Further, where available, communication may take place using any combination of additional transport layers including, for example, Global System for Mobile Communications (GSM) and/or Universal Mobile Telecommunications System (UMTS) alone or in combination with other protocols for transmitting information.

Input device 45 can be any suitable user input device or combination of devices, for example a keyboard, a mouse, voice recognition software and microphone, etc. input device 45 may allow a user of the system to input data shown and/or to further interact with the system, for example, to cause identity document information to be transmitted to a regulatory authority and/or registered in a repository (e.g. a hotel guest database).

Processor 10 may be any suitable device for carrying out processing of instructions so as to carry out functions described herein. For example processor 10 may be a multipurpose computer, a smart phone device, a terminal device, etc. For example, where processor 10 is a terminal device, network 35 may be a cloud network, and functions of the system described herein may be performed on a server remote from processor 10, in other words "performed in the cloud". In such a case processor 10 may take information obtained from input device 45, signature pad 15, camera 20, ID document scanner 25 and send such information via cloud network 35 to a server to be processed and output from the server sent back via the cloud network 35 to processor 10 to provide information to a user of the system. One of skill in the art will recognize that regardless of whether processor 10 is a multipurpose computer located on-site with the user, or remote server, the logical configuration of the device performing the functions will be similar.

Processor 10 may include any suitable operating system, for example, Windows, Mac OS, iOS, Android, LINUX, UNIX, etc. Such operating systems may be proprietary to a manufacturer of processor 10, proprietary in general, open source, or any combination thereof.

With the above in mind figure 2 is a logical diagram of the processor of Fig. 1 highlighting exemplary software modules that may be provided for carrying out functions described herein. The modules may be developed using object oriented and/or other development techniques, and using Java, C, C++, BASIC, and/or any suitable programming language. One of skill in the art will recognize that many programming languages exist and likely more will be developed in the future. Therefore, the scope of the present disclosure is not intended to be limiting to any one programming language mentioned herein.

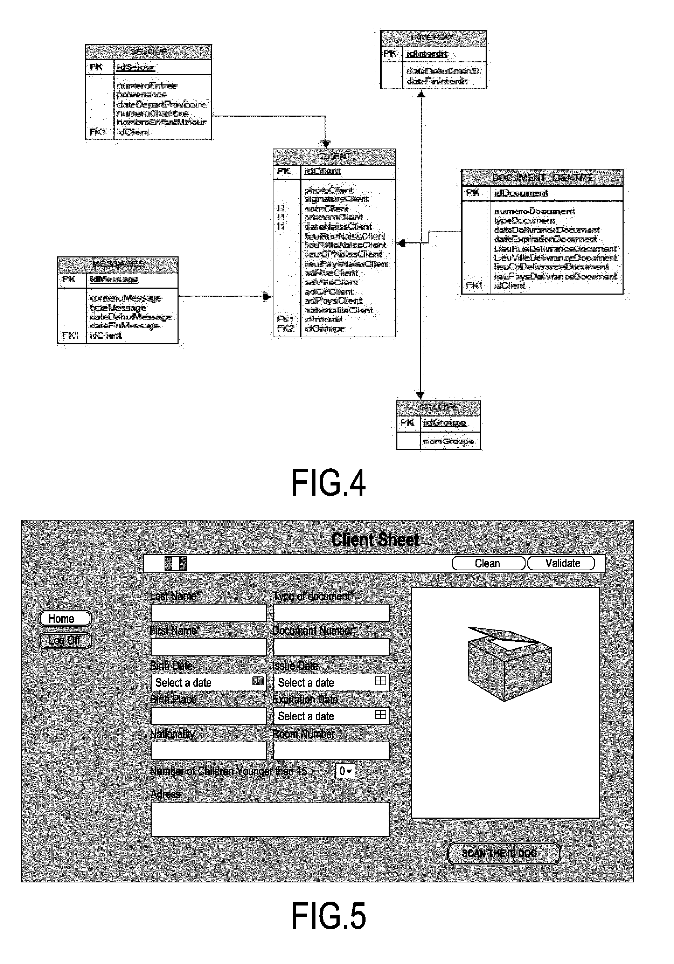

Further, each of the modules may be configured for interfacing with one or more databases configured to store, organize, and retrieve data. In some embodiments, such databases may be implemented using Microsoft SQL Server, Oracle, MySQL, flat file systems, or any other suitable data repository. The one or more databases may contain tables consisting of columns and rows, for example, a structure similar to that described with regard to Fig. 4. Notably, one or more databases may be implemented for purposes of storing data related to the present system and methods.

One of skill in the art will recognize that the modules described in the logical diagram figure 2 are exemplary only and one of skill may modify functionality associated with processor 10 as desired. Document validation module 100 may be configured to perform functions related to validation of, for example, security features present on identity document for purposes of validating such a document. Image validation module 105 may be configured to validate one or more images obtained from, for example, camera 20 with image data obtained from identity document scanner 25, for example, data stored in a biometric chip on said identity document.

Signature validation module 110 may be configured to perform signature validation for signature obtained by signature pad 15 with signature data stored and provided by identity document scanner 25.

Data field processor module 115 may be configured to process information fields present on identity document and provided by identity document scanner 25, for example using information provided by character recognition module 125, which will be described below.

Image processing module 120 may be configured to process image data obtained from identity document scanner 25. For example, a full image of the identity document itself, images stored within storage devices on the identity document being scanned, among others.

Character recognition module 125 may be configured to perform optical character recognition on information fields of the identity document based on an image provided by identity document scanner 25. One of skill in the art will recognize that identity document scanner 25 may be configured to perform some optical character recognition. However, as noted above the ability to recognize characters on certain identity documents has been limited in the past. Therefore character recognition module 125 in conjunction with image processing module 120 and data field processor module 115 may apply document templates, and/or perform algorithms and scripts provided by info server 40 for purposes of enabling recognition of an unrecognized identity document and its associated data fields. For example network receive and transmit module 135 may transmit a request to info server 44 a script and/or algorithm, where information on identity document scanned by identity document scanner 25 is not in a recognized format. Upon receiving such a request, info server 40 may search for updated format information related to a country and or jurisdiction from which the identity document has been identified as originating. Info server 40 may then provide an updated script and/or algorithm to processor 10 such that character recognition module 125 may be enabled to perform data extraction in conjunction with data field processor module 115 and image processing module 120.

Encryption module 130 may be provided to perform data encryption for transmission secure data to a regulatory authority, and to receive encrypted data from such regulatory authority and decrypt such information for use by processor 10. For example, (e.g., Advanced Encryption Standard (AES), Data Encryption Standard (DES), etc.) and security level (e.g., 128-bit, 40-bit, etc.).

As mentioned above network receive and transmit module 135 may provide an interface with network interface 55 for communicating with network 35 and other connected devices, e.g. info server 40.

Data retrieval module 140 may be configured to send and receive and store data from and to a database, for example, such as that shown at figure 4. Data retrieval module 140 may include various function calls to facilitate such data retrieval and storage.

Three functions were created for managing interactions in the database shown at Fig. 4. These three functions were used in a list of elements (messages, users, and clients).

Generally, a user should be able to access the data warehouse and to make requests directly from a client interface, e.g., processor 10. The user thus has access to a centralized data warehouse. Even though the amount of storage and the computation power may be large, the user nevertheless should be able to obtain the searched data quickly, together with more complex aggregations based on that data.

In order to satisfy those requirements, a warehouse system associated with a request processing mechanism that is optimized for minimizing response time to a given user request was prepared, since the functional environment is generally highly dynamic and varies as a function of the availability of resources (data, nodes, networks).

In a first stage, the process of executing requests should obtain information about the availability of the requested data. Thereafter it identifies the various choices possible for obtaining the result of the request. This result can be obtained by means of data stored directly on one or more nodes of the grid or from detailed data that needs to be aggregated on the fly (e.g. from a backup).

Alternatively, combinatory optimization techniques may be implemented. Based on "meta-heuristics" such as generic or simulated annealing algorithms, techniques herein make it possible to combine parameters leading to an optimized scheduling solution, by acting in intelligent manner to test just a few of the possible combinations.

Algorithms and templates for managing determination of a relationship between the plurality of data fields and one or more required security information fields were created, including use of mathematical methods to incorporate a plurality of calculation rules by means of probability relationships. For example, a template for an identity document may be used as a "map" to determine where particular data fields of interest should be located on a scanned image of the identity document. Processor 10 may use such a map to relate the information found in the data fields to relationship between one or more required security information fields.

In another example, a script may be provided for analyzing an optical control band of the identity document, for example, as is provided on a French identity document. Control keys can be generated for purposes of determining key security information on the identity document based on position and type of character present in the optical control band. Relevant security information can then be assembled using the following pseudo-code based on position of a cursor in the optical control band:

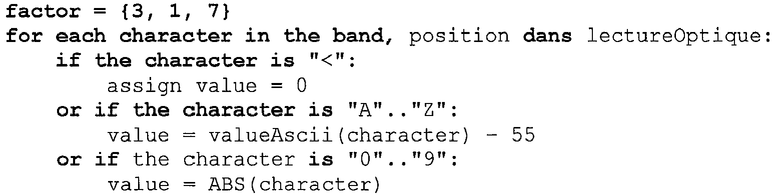

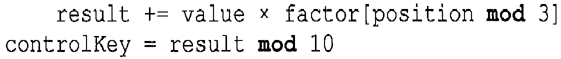

One example of the system implementation is a software solution for use in hotel receptions in order to assist hotels in complying with their declaration obligations related to guest information.

The software solution enables rapid extraction of data from the identity documents that hotel clients need to present to reception when checking in, and makes it possible to generate the "police forms" that hotels are required to send to the authorities.

This implementation thus makes it possible to reduce the waiting time of new arrivals by accelerating the reception of hotel clients, and by sparing them from the often poorly received task of manually filling in a paper form.

Forms can be generated in any format, e.g., PDF format, and the solution provides reception staff with the option of printing them out immediately, archiving them in digital format, sending electronically to a regulatory authority, etc.

Signature pad 15 enables a guest's signature to be scanned, and thus to avoid printing out the forms.

Furthermore, a list, known as the "police journal" can be printed out periodically, generally daily, from the data that has been collected. This police journal may also be sent directly to the regulatory authorities on an as desired basis.

This list, together with the individual forms can be transmitted daily to the authorities, using a highly secure and encrypted transmission module.

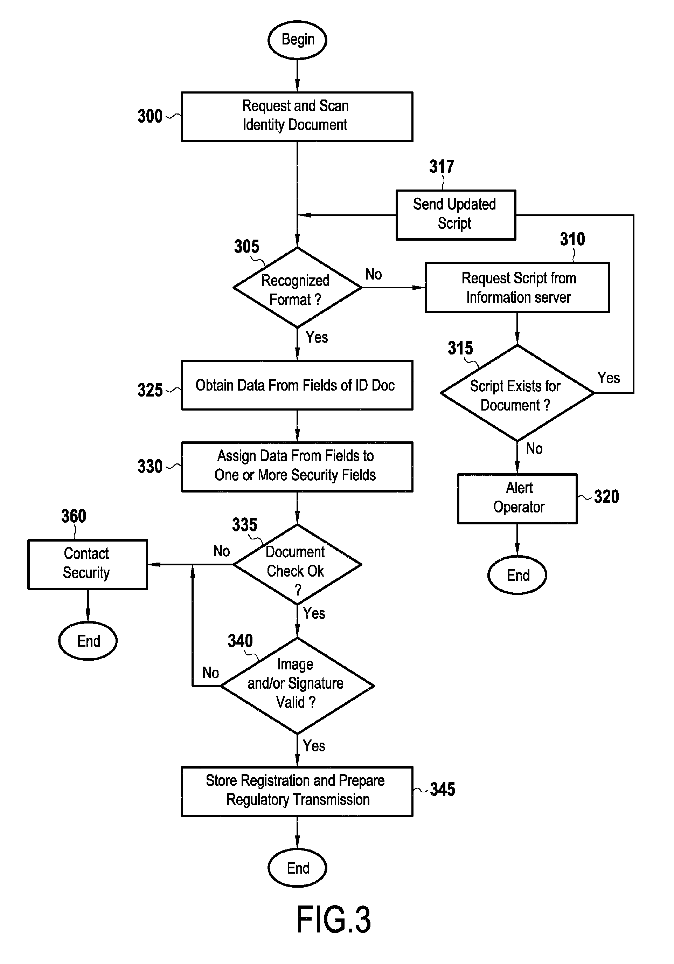

Fig. 3 is a flowchart demonstrating one exemplary method of processing according to embodiments of the present disclosure. In the following example, an implementation as a hotel guest registration system is described. A first screen appears, inviting the user (e.g., reception hostess) to enter her identifier and password and to login to the system. The login then gives access to the database.

This operation may be presented only on starting the application, when the user first signs on.

Once the user is connected, the application starts.

The user can then put into the scanner the identity document of a client who has come to reception.

The user clicks on the "scan document" button (step 300).

Information from a plurality of data fields is extracted by the scanner and sent to the processor for processing, and for determination of whether the document is in a recognized format (step 305).

If the document is not in a recognized format, or contains at least some information that cannot be recognized (step 305: No) a request may be sent to information server 40 (step 310). For example a request to information server 40 may include a name of the jurisdiction or country from which the identity document originated.

Information server 40 may then use information included in the request to determine whether a template, script or updated algorithm exists (e.g. in a database) for the identity document that is in an unrecognized format (step 315). If such a template, script and/or algorithm exists (step 315: yes) information server 40 may send the updated template, script and/or algorithm to processor 10 to enable processing of the previously unrecognized format (step 317).

If no script and/or algorithm exists to enable processing of the unrecognized document (step 315: no) an alert may be sent to the operator of the system indicating that the document may not be processed and that manual entry was be undertaken (step 320).

Once the format of the document is recognized (step 305: yes) the identity document may be processed to obtain information from the data fields of the identity document (step 325). For example, information such as a user's last name, first name, birthdate, birthplace, nationality, document type, document number, issue and expiration dates of the document, user address, etc. may be captured from data fields on the identity document. Such information may be captured not only from data fields present on the identity document, but also verified from storage present on the identity document, e.g. magnetic strip, chip, etc.

Once sorted and analyzed, the data and the image from the identity document are displayed on the interface of the application and associated with one or more security fields to be prepared for regulatory document (step 330).

When not otherwise automatically assigned by processor 10 based on reservation information for example, the user may then fill in fields that are needed for the police form but that do not appear in the identity document, for example room number, and number of children traveling with and aged under 15 years.

Certain checks may then be undertaken with regard to elements associated with the document (step 335), for example based on information provided by information server 40 and/or other regulatory information, the identity document may be determined to be acceptable. For example, security features (e.g. fonts, watermarks, holograms, embedded images, data in a machine readable zone, etc.) may be checked against a database of known security features in a given jurisdiction to determine if the document may be accepted. Where the document is determined to be unacceptable (i.e., fonts incorrect, missing watermark, etc.) (step 335: no), an indication may be provided on display 34 the user to contact security (step 360). One of skill in the art will recognize that an indication to call security is exemplary only, and steps of lesser or greater severity may be undertaken depending upon a threat level in place at any given time (e.g. VigiPirate level in France). Where the document itself is determined to be acceptable (step 335: yes) processor 10 may undertake to determine whether an image associated with the identity document has at least a general similarity to an image captured by camera 20 (step 340). In addition signature information which may be stored on the identity document may also be validated at this time. For example, a pixel by pixel comparison may be made between image data obtained by camera 20 and image data stored in a data chip on the identity document to determine whether sufficient correspondence exists. Where is determined that the images sufficiently correspond (step 340: yes) the document may be determined acceptable, and a registration associated with the hotel guest (i.e. the identity document owner) may be prepared and regulatory transmission made to the regulating authorities (e.g. the national police, transportation safety administration, etc.) (step 345).

Where it is determined that the image and/or signature are not valid (step 340: no) again security may be contacted (step 360) or other steps of lesser or greater severity may be undertaken.

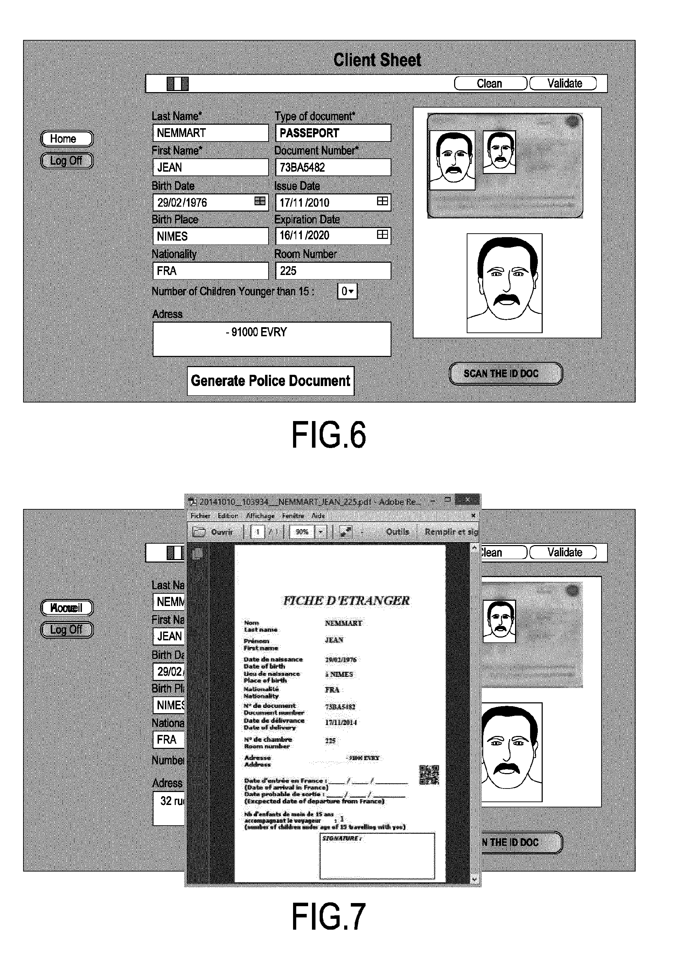

Additional steps that may be undertaken, but not shown at figure 3, are for example, a button labeled "generate police form" may appears on the interface displayed at display 30. The user may click such a button, to result in generation of a "foreigner form" or "police form" appearing in PDF format as shown at Fig. 7. As noted above, at this time, the form data has already been stored and preferably sent to the regulatory authority. Displaying it gives the user the option of printing the form.

The client can then sign the "PDF" form using signature pad 15, for example. The user then clicks on the "confirm" button in order to store and finalize the operation and the guest may then be provided keys and proceed to his/her hotel room.

According to some embodiments, a search function may be carried out by processor 10 in communication with information server 40. For example, data "mining" of the database may be performed to consult a history of the recently registered guest.

With regard to such a search, numerous search criteria may be used, for example, last name, first name, date of arrival, room number, document type, document number, etc. This search function may be useful when the police requests information from the hotel, among others.

Fields from unrecognized documents that are not read from those non-standardized documents can still be input manually in only a few seconds.

Secure transfer of police forms and journals to the authorities is facilitated.

Such transfer may include encryption of the information using secure and unique keys that may identify a sender of the information while also receiving a secure "handshake" return message from the receiving authority by way of another secure and unique key.

In addition, information server 40 may be provided so that identification documents having frequent changes in format, may continue to be handled by the system. The information server 40 may be updated on an as desired basis to include information (e.g., scripts, algorithms, code, document templates, etc.) used to process identification documents. For example, where a country has recently changed a format of its passport, and such a new format version of a passport is submitted, the system may retrieve information from the information server enabling processing of this new format passport (e.g., a document template).

Connection to information server 40 may be by way of wireless communication, wired (e.g., Ethernet, internet, etc) or any other suitable method. Incidentally, such communication methods may also be used when transmitting the guest registration and information related to the required security information registration fields to a central repository and/or to a regulatory authority.

The above discussed functionality may also be provided in a cloud type environment, i.e., provided as a software service.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present disclosure.

## Claims

1. A system for enhanced document recognition and security, the system comprising:
an identification document reading means (25) configured to read an identification document and to obtain information containing a plurality of data fields from the identification document; and
processing means (10) configured to:
receive the information;
determine a relationship between the plurality of data fields and one or more required security information fields;
link the one or more security information fields to a registration;
determine acceptability of the identification document; and
electronically transmit the registration and information related to the required security information registration fields to a central repository.

2. The system according to claim 1, wherein the identification document is of an undefined format.

3. The system according to any of the previous claims, wherein the processing means (10) are configured to encrypt the registration and the required security information registration fields for to secure transmission to a regulatory authority, and wherein the processing means (10) are optionally configured to encrypt the registration and the required security information registration fields for to secure transmission to the central repository.

4. The system according to any of the previous claims, wherein the processing means (10) are configured to transmit the registration and information related to the required security information registration fields signed with a digital signature associated with the registering entity.

5. The system according to any of the previous claims, wherein the processing means (10) are is configured to receive a secure electronic response from the regulatory authority and/or the central repository.

6. The system according to any of the previous claims, wherein the identification document reading means (25) is configured to read an electronic chip associated with the identification document, and wherein the identification document reading means (25) is preferably configured to read image data associated with one or more images stored on the electronic chip.

7. The system according to claim 9, wherein the image data is associated with at least one of a picture of an owner of the identity document and a handwritten signature of the owner.

8. The system according to any of the previous claims, comprising signature obtaining means (15) configured to receive a handwritten signature of an owner of the identity document, and wherein the processing means (10) are preferably configured to verify the signature received from the signature obtaining means (15) based on the image data associated with the handwritten signature of the owner.

9. The system according to any of the previous claims, further comprising optical detection means (20) configured to obtain an image of the owner, and wherein the processing means (10) are preferably configured to verify the image data from the electronic chip with the image of the owner obtained by the optical detection means (20).

10. The system according to any of the preceding claims, further comprising an information server (40), the information server (40) being configured to store and provide information related to a plurality of identification document formats.

11. The system according to claim 10, wherein the information server (40) is configured to provide a script enabling processing of one or more identification documents having unrecognized formats.

12. The system according to claim 11, wherein the unrecognized formats are a result of an official format change promulgated by a governmental authority.

13. A method for enhanced document recognition and security, the method comprising:
reading an identification document to obtain information containing a plurality of data fields from an identification document; and
determining a relationship between the plurality of data fields and one or more required security information fields;
linking the one or more security information fields to a registration;
determine acceptability of the identification document; and
transmitting the registration and information related to the required security information registration fields to a central repository.

14. The method according to claim 13, comprising:
receiving a script from an information server; and
processing one or more identification documents having an unrecognized format based on the script.

15. The method according to any of claims 13-14, comprising:
transmitting the registration to a regulatory authority with a registration request; and
receiving a response to the registration request.
